# FASCICULE DE BREVET EUROPEEN

(11) **EP 3 775 988 B1**
(45) Date de publication et mention de la délivrance du brevet: **11.01.2023**
(21) Numéro de dépôt: 19717191.1
(22) Date de dépôt: 20.03.2019
(51) Int. Cl.: G01S 15/931, G01S 7/527

(54) **PROCÉDÉ ET DISPOSITIF DE DÉTECTION D'OBJETS DANS L'ENVIRONNEMENT D'UN VÉHICULE, EN PRÉSENCE DE GOUTELETTES**
VERFAHREN UND VORRICHTUNG ZUR ERFASSUNG VON OBJEKTEN IN DER UMGEBUNG EINES FAHRZEUGS IN ANWESENHEIT VON TRÖPFCHEN
METHOD AND DEVICE FOR DETECTING OBJECTS IN THE ENVIRONMENT OF A VEHICLE, IN THE PRESENCE OF DROPLETS

(30) Priorité: 04.04.2018 FR 1852919
(43) Date de publication de la demande: 17.02.2021
(73) Titulaire: PSA Automobiles SA, 78300 Poissy (FR)
(72) Inventeur: GURRET, Fabien, 92160 Antony (FR); THEEL, Florian, 92140 Clamart (FR); FLORES GONZALEZ, Jose Antonio, 92300 Levallois Perret (FR)
(86) Numéro de dépôt international: PCT/FR2019/050633
(87) Numéro de publication internationale: WO 2019/193264

(56) Documents cités:
- DE-A1-102010 033 207
- DE-A1-102011 086 244
- DE-A1-102016 118 307
- DE-A1-102016 118 308
- US-B2- 9 310 484

## Description

L'invention concerne les véhicules, et plus précisément la détection d'objets dans l'environnement des véhicules.

Certains véhicules, généralement de type automobile, comprennent un dispositif de détection chargé de détecter des objets dans une partie au moins de leur environnement. Ce type de dispositif de détection comprend des moyens d'analyse agencés de manière à analyser des données d'environnement, qui sont acquises périodiquement par des moyens d'acquisition installés en des endroits choisis du véhicule, afin de détecter un indice de présence d'un objet. Lorsque cet indice de présence est détecté dans N périodes successives, avec N ≥ 2, par les moyens d'analyse, alors ces derniers considèrent qu'un objet est effectivement présent dans la partie d'environnement qu'ils analysent.

Cette analyse de l'environnement est généralement utilisée par un dispositif d'assistance à la conduite (par exemple de type ADAS (« Advanced Driver Assistance System »)) qui est embarqué dans le véhicule et chargé d'aider le conducteur et/ou le véhicule en déterminant sa trajectoire et/ou sa vitesse et/ou son accélération et les commandes correspondantes pour les organes impliqués dans son déplacement lorsqu'il est à conduite automatisée (ou autonome).

On entend ici par « véhicule à conduite automatisée », un véhicule pouvant être conduit de façon automatisée (partielle ou totale (sans intervention de son conducteur)) pendant une phase de conduite automatisée, ou de façon manuelle (et donc avec intervention de son conducteur sur le volant et/ou les pédales) pendant une phase de conduite manuelle.

Un inconvénient des moyens d'acquisition, et plus précisément de leurs capteurs, réside dans le fait que leur performance peut varier en fonction des conditions climatiques. Ainsi, la présence de gouttelettes (ou « spray ») au-dessus de la route du fait du passage des véhicules dégrade fortement la capacité de détection des capteurs à ultrasons, et à un moindre niveau la capacité de détection des caméras numériques et des moyens d'acquisition utilisant comme sonde la lumière d'un laser (lasers de balayage et lidars).

Cette dégradation de la capacité de détection peut induire la détection d'un objet inexistant ou d'un objet à une position erronée, ou la non-détection d'un objet réel, ce qui diminue la robustesse des assistances à la conduite et donc peut limiter leur fonctionnement, en particulier dans le cas d'une conduite automatisée (ou autonome).

On connait de DE 102016118307 une méthode pour détecter des objets dans un environnement d'un véhicule, et du document DE102016118308 une méthode pour déterminer une distance entre un véhicule et un objet détecté dans l'environnement du véhicule.

L'invention a donc notamment pour but d'améliorer la situation.

Elle propose notamment à cet effet un procédé, d'une part, permettant de détecter des objets dans un environnement entourant une partie au moins d'un véhicule comprenant des moyens d'acquisition à ultrasons acquérant périodiquement des données dans l'environnement, et, d'autre part, comprenant une étape dans laquelle on analyse les données d'environnement acquises sur chaque période afin de détecter un indice de présence d'un objet, et on considère qu'un objet est effectivement présent en cas de détection de cet indice de présence dans N périodes successives, avec N ≥ 2.

Ce procédé de détection se caractérise par le fait que dans son étape on détermine, à partir d'analyses effectuées sur M périodes successives, avec M ≥ 2, une valeur d'un premier paramètre représentatif de la présence de gouttelettes dans l'environnement, et, lorsque cette valeur déterminée du premier paramètre est supérieure à un seuil, on adapte la valeur en cours de N en fonction de cette valeur déterminée du premier paramètre, caractérisé en ce que dans ladite étape on détermine, à partir desdites M analyses successives, d'une part, une première grandeur statistique de distances déterminées pour tous les indices de présence d'objet détectés, et, d'autre part, une seconde grandeur statistique de variations de distances déterminées pour tous les indices de présence d'objet détectés, puis on détermine ladite valeur du premier paramètre en fonction desdites première et seconde grandeurs statistiques déterminées, et en ce que en ce que dans ladite étape on détermine ladite valeur du premier paramètre en effectuant une somme pondérée desdites première et seconde grandeurs statistiques déterminées.

Ainsi, en présence de gouttelettes au-dessus de la route sur laquelle circule un véhicule, on peut désormais déterminer si ces gouttelettes sont de nature à perturber les mesures effectuées au moins par les moyens d'acquisition à ultrasons, et dans l'affirmative on peut adapter en conséquence la façon dont sont effectuées les analyses.

Le procédé de détection selon l'invention peut comporter d'autres caractéristiques qui peuvent être prises séparément ou en combinaison, et notamment :
➢ les première et seconde grandeurs statistiques peuvent être des variances ;
   - dans son étape, lorsque le véhicule comprend en outre d'autres moyens d'acquisition qui sont différents des moyens d'acquisition à ultrasons et qui acquièrent périodiquement d'autres données d'environnement, on peut analyser les autres données d'environnement acquises sur chaque période afin de détecter un indice de présence d'un objet, et on peut considérer qu'un objet est effectivement présent en cas de détection de cet indice de présence dans P périodes successives, la valeur de P étant supérieure ou égale à deux et fonction de la valeur déterminée du premier paramètre ;
➢ dans son étape, lorsque la valeur déterminée du premier paramètre est supérieure au seuil, on peut associer à un objet, considéré comme effectivement présent après analyses des autres données d'environnement, une valeur d'un autre second paramètre, représentatif d'un niveau de confiance et fonction de la valeur déterminée du premier paramètre.

L'invention propose également un dispositif de détection mettant en oeuvre le procédé selon les revendications 1 à 5.

L'invention propose également un véhicule, éventuellement de type automobile, et comprenant des moyens d'acquisition à ultrasons acquérant périodiquement des données dans un environnement qui l'entoure au moins partiellement, et un dispositif de détection du type de celui présenté ci-avant.

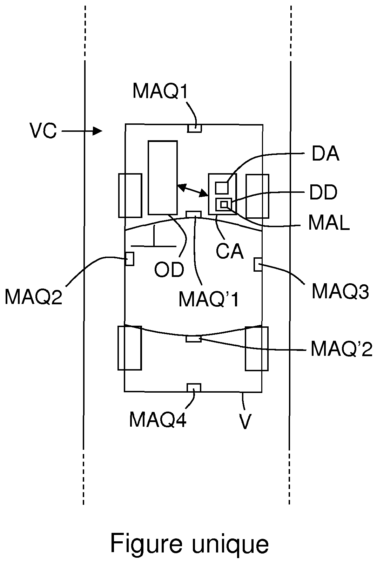

D'autres caractéristiques et avantages de l'invention apparaîtront à l'examen de la description détaillée ci-après, et du dessin annexé, sur lequel l'unique figure illustre schématiquement et fonctionnellement une voie de circulation sur laquelle circule un véhicule comprenant des moyens d'acquisition de données d'environnement et un calculateur muni d'un exemple de réalisation d'un dispositif de détection selon l'invention.

L'invention a notamment pour but de proposer un procédé de détection, et un dispositif de détection DD associé, destinés à permettre la détection d'objets dans une partie au moins de l'environnement d'un véhicule V.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule pouvant circuler sur des voies de circulation terrestres.

On a schématiquement et fonctionnellement représenté sur l'unique figure une voie de circulation VC sur laquelle circule un véhicule V comprenant des moyens d'acquisition MAQj et MAQ'k et un calculateur CA muni d'un exemple de réalisation d'un dispositif de détection DD selon l'invention.

Afin que l'invention puisse être mise en oeuvre, il faut que le véhicule V comprenne des moyens d'acquisition à ultrasons MAQj chargés de fournir périodiquement (éventuellement sous forme de cartographies) des données d'environnement représentatives de la présence d'objets de natures diverses présents dans leur zone d'acquisition et des attributs de ces objets.

Ces objets peuvent être des véhicules, des piétons, des animaux, des choses, des bâtiments, ou des rambardes de sécurité. Par ailleurs, un attribut peut, par exemple, être un paramètre cinématique, des dimensions, une forme, un type, ou une probabilité d'existence. Un paramètre cinématique peut, par exemple, être une position par rapport au véhicule V, la direction (ou le cap), la vitesse relative par rapport au véhicule V, et l'accélération relative par rapport au véhicule V.

Dans l'exemple illustré non limitativement sur l'unique figure le véhicule V est équipé de quatre moyens d'acquisition à ultrasons MAQj (ici j = 1 à 4). Mais le nombre de moyens d'acquisition à ultrasons MAQj peut prendre n'importe quelle valeur supérieure ou égale à un (1).

Ici, un premier moyen d'acquisition à ultrasons MAQ1 (j = 1) analyse une zone située devant le véhicule V et légèrement sur ses deux côtés latéraux, un deuxième moyen d'acquisition MAQ2 (j = 2) analyse une zone située sur le côté latéral gauche du véhicule V et donc partiellement autour des parties avant et arrière de ce dernier (V), un troisième moyen d'acquisition à ultrasons MAQ3 (j = 3) analyse une zone située sur le côté latéral droit du véhicule V et donc partiellement autour des parties avant et arrière de ce dernier (V), et un quatrième moyen d'acquisition à ultrasons MAQ4 (j = 4) analyse une zone située derrière le véhicule V et légèrement sur ses deux côtés latéraux.

On notera que dans l'exemple illustré non limitativement sur l'unique figure le véhicule V est aussi équipé d'autres moyens d'acquisition MAQ'k, éventuellement redondants avec certains des moyens d'acquisition à ultrasons MAQj. Ici, un premier moyen d'acquisition MAQ'1 (k = 1) analyse une zone située devant le véhicule V et légèrement sur ses deux côtés latéraux, et un second moyen d'acquisition MAQ'2 (k = 2) analyse une zone située derrière le véhicule V et légèrement sur ses deux côtés latéraux.

Ces autres moyens d'acquisition MAQ'k peuvent, par exemple, comprendre chacun au moins une caméra numérique. En variante, ils pourraient chacun comprendre au moins un laser de balayage ou au moins un radar ou lidar. Par conséquent, chacun d'entre eux peut fournir périodiquement des images numériques ou des données d'environnement (éventuellement sous forme de cartographies) représentatives de la présence d'objets présents dans leur zone d'acquisition et des attributs de ces objets.

Comme évoqué précédemment, l'invention propose un procédé de détection destiné à détecter des objets dans une partie au moins de l'environnement du véhicule V.

Ce procédé de détection, selon l'invention, comprend une étape qui peut être mise en œuvre au moyen d'un dispositif de détection DD équipant le véhicule V. Comme illustré sur l'unique figure un dispositif d'assistance DA, selon l'invention, comprend au moins des moyens d'analyse MAL.

Dans l'exemple illustré non limitativement sur l'unique figure, le dispositif de détection DD (et notamment ses moyens d'analyse MAL) fait (font) partie d'un calculateur CA qui assure éventuellement au moins une autre fonction (comme on le verra plus loin). Mais cela n'est pas obligatoire. En effet, le dispositif de détection DD pourrait comprendre son propre calculateur. Par conséquent, le dispositif de détection DD peut être réalisé sous la forme de modules logiciels (ou informatiques ou encore « software »), ou d'une combinaison de circuits ou composants électriques ou électroniques (ou « hardware ») et de modules logiciels.

Dans l'étape du procédé on analyse les données d'environnement acquises (par les moyens d'acquisition à ultrasons MAQj et les éventuels autres moyens d'acquisition MAQ'k) sur chaque période (d'acquisition) afin de détecter un indice de présence d'un objet, et on considère qu'un objet est effectivement présent lorsque cet indice de présence est détecté dans N périodes successives, avec N ≥ 2. De plus, dans cette étape on détermine, à partir d'analyses effectuées sur M périodes successives, avec M ≥ 2, une valeur vp1 d'un premier paramètre p1 qui est représentatif de la présence de gouttelettes dans l'environnement du véhicule V, et, lorsque cette valeur déterminée vp1 du premier paramètre p1 est supérieure à un seuil s (soit vp1 > s), on adapte la valeur en cours de N en fonction de cette valeur déterminée vp1 du premier paramètre p1.

Cette analyse, cette considération (ou décision), cette détermination et cette adaptation sont réalisées par les moyens d'analyse MAL du dispositif de détection DD.

Grâce à l'invention, lorsqu'il y a des gouttelettes (ou spray) au-dessus de la voie de circulation VC sur laquelle circule le véhicule V, il est désormais possible de déterminer si ces gouttelettes sont de nature à perturber les mesures effectuées au moins par les moyens d'acquisition à ultrasons MAQj, et dans l'affirmative d'au moins adapter le fonctionnement des moyens d'analyse MAL.

De préférence, lorsque l'on considère que les gouttelettes sont de nature à perturber les mesures, on augmente la valeur en cours de N afin d'augmenter la probabilité que l'indice de présence d'un objet concerne un objet bien réel. Dans ce cas, dès que l'on considère que les gouttelettes ne sont plus de nature à perturber les mesures ou qu'il n'y a plus de gouttelettes, on utilise de nouveau une valeur de N prédéfinie. Par exemple, cette valeur de N prédéfinie peut être comprise entre 5 et 10.

Egalement par exemple, la valeur de M peut être comprise entre 3 et 6.

On notera que dans l'étape du procédé, lorsque la valeur déterminée vp1 du premier paramètre p1 est supérieure au seuil s, on peut aussi adapter une valeur vp2 en cours d'un second paramètre p2, qui est représentatif d'un niveau de confiance associé à un objet effectivement présent, en fonction de cette valeur déterminée vp1 du premier paramètre p1. La valeur vp2 du second paramètre p2 représente le niveau de confiance que l'on a dans la détection d'un objet, lequel niveau dépend par exemple de l'amplitude totale de la variance des variations de la distance à laquelle l'objet est détecté.

De préférence, lorsque l'on considère que les gouttelettes sont de nature à perturber les mesures, on diminue la valeur vp2 en cours d'un second paramètre p2 afin de signaler que l'on est moins confiant dans la matérialité de la détection d'un objet. Dans ce cas, dès que l'on considère que les gouttelettes ne sont plus de nature à perturber les mesures ou qu'il n'y a plus de gouttelettes, on utilise de nouveau une valeur vp2 prédéfinie du second paramètre p2.

Ce second paramètre p2, qui caractérise la confiance que l'on a dans une détection d'objet, est généralement utilisé, avec les résultats des analyses des données d'environnement effectuées par les moyens d'analyse MAL, par un dispositif d'assistance DA que comprend le véhicule V et qui est éventuellement de type ADAS (Advanced Driver Assistance System). Un tel dispositif d'assistance DA est chargé d'assister (ou aider) le conducteur du véhicule V et/ou le véhicule V en déterminant sa trajectoire et/ou sa vitesse et/ou son accélération et les commandes correspondantes pour les organes OD impliqués dans son déplacement lorsqu'il est à conduite au moins partiellement automatisée (ou autonome).

On entend ici par « véhicule à conduite au moins partiellement automatisée » un véhicule pouvant être conduit de façon automatisée (partielle ou totale (sans intervention de son conducteur)) pendant une phase de conduite automatisée, ou de façon manuelle (et donc sous le seul contrôle de son conducteur) pendant une phase de conduite manuelle.

Les organes OD sont par exemple le groupe motopropulseur (ou GMP), le système de freinage, la direction assistée électrique, et les moyens de changement de vitesse (par exemple une boîte de vitesses automatique).

On notera que l'on peut envisager d'adapter le fonctionnement de l'éventuel dispositif d'assistance DA en fonction de la valeur déterminée vp1 du premier paramètre p1. A titre d'exemple, lorsque l'on considère que les gouttelettes sont de nature à perturber les mesures, on peut considérer que la perception de l'environnement est moins robuste et que l'adhérence du véhicule V est moins bonne. Par conséquent, on peut, par exemple, réduire la vitesse du véhicule V et/ou désactiver la conduite automatisée afin d'augmenter la sécurité de la conduite.

Dans l'exemple illustré non limitativement sur l'unique figure, le dispositif d'assistance DA fait partie du calculateur CA qui comprend également le dispositif de détection DD. Mais cela n'est pas obligatoire. En effet, le dispositif d'assistance DA pourrait faire partie d'un autre calculateur que le calculateur CA, ou bien pourrait comprendre son propre calculateur. Par conséquent, le dispositif d'assistance DA peut être réalisé sous la forme de modules logiciels, ou d'une combinaison de circuits ou composants électriques ou électroniques et de modules logiciels.

Par ailleurs, le dispositif de détection DD pourrait éventuellement faire partie du dispositif d'assistance DA.

On notera également que dans l'étape du procédé, on (les moyens d'analyse MAL) peu(ven)t déterminer, à partir des M analyses successives, d'une part, une première grandeur statistique gs1 de distances déterminées pour tous les indices de présence d'objet détectés, et, d'autre part, une seconde grandeur statistique gs2 de variations de distances déterminées pour tous les indices de présence d'objet détectés. Chaque distance concernée par la première grandeur statistique gs1 est une distance séparant le capteur d'un moyen d'acquisition à ultrasons MAQj d'un objet potentiel sur lequel les ultrasons de ce capteur se sont réfléchis et desquels a été déduit un indice de présence d'objet. Puis, on (les moyens d'analyse MAL) peu(ven)t déterminer la valeur vp1 du premier paramètre p1 en fonction de ces première gs1 et seconde gs2 grandeurs statistiques déterminées.

Par exemple, on (les moyens d'analyse MAL) peu(ven)t déterminer la valeur vp1 du premier paramètre p1 en effectuant une somme pondérée des première gs1 et seconde gs2 grandeurs statistiques déterminées (soit vp1 = a*gs1 + b*gs2, où a et b sont des coefficients de pondération).

Egalement par exemple, les première gs1 et seconde gs2 grandeurs statistiques peuvent être des variances. Mais il peut s'agir d'autres grandeurs statistiques comme par exemple d'écarts types.

On notera également que dans l'étape du procédé, lorsque le véhicule V comprend d'autres moyens d'acquisition MAQ'k (différents des moyens d'acquisition à ultrasons MAQj et acquérant périodiquement d'autres données d'environnement), on (les moyens d'analyse MAL) peu(ven)t analyser les autres données d'environnement acquises sur chaque période afin de détecter un indice de présence d'un objet. Dans ce cas, on (les moyens d'analyse MAL) peu(ven)t considérer qu'un objet est effectivement présent lorsque cet indice de présence est détecté dans P périodes successives, la valeur de P étant supérieure ou égale à deux et fonction de la valeur déterminée vp1 du premier paramètre p1.

De préférence, lorsque l'on considère que les gouttelettes sont de nature à perturber les mesures, on augmente la valeur en cours de P afin d'augmenter la probabilité que l'indice de présence d'un objet concerne effectivement un objet bien réel. Dans ce cas, dès que l'on considère que les gouttelettes ne sont plus de nature à perturber les mesures ou qu'il n'y a plus de gouttelettes, on utilise de nouveau une valeur de P prédéfinie. Par exemple, cette valeur de P prédéfinie peut être comprise entre 5 et 10.

On notera également que dans l'étape du procédé, lorsque la valeur déterminée vp1 du premier paramètre p1 est supérieure au seuil s, on (les moyens d'analyse MAL) peu(ven)t associer à un objet, considéré comme effectivement présent après analyses des autres données d'environnement (ici issues d'un autre moyen d'acquisition MAQ'k), une valeur vp2' d'un autre second paramètre p2', représentatif d'un niveau de confiance et fonction de cette valeur déterminée vp1 du premier paramètre p1.

De préférence, lorsque l'on considère que les gouttelettes sont de nature à perturber les mesures, on diminue la valeur vp2' en cours de l'autre second paramètre p2' afin de signaler que l'on est moins confiant dans la matérialité de la détection d'un objet. Dans ce cas, dès que l'on considère que les gouttelettes ne sont plus de nature à perturber les mesures ou qu'il n'y a plus de gouttelettes, on utilise de nouveau une valeur vp2' prédéfinie de l'autre second paramètre p2'.

Cet autre second paramètre p2', qui caractérise la confiance que l'on a dans une détection d'objet, est généralement utilisé, avec les résultats des analyses des autres données d'environnement effectuées par les moyens d'analyse MAL, par l'éventuel dispositif d'assistance DA.

On notera également que sur l'unique figure le dispositif de détection DD est très schématiquement illustré avec seulement ses moyens d'analyse MAL. Ce dispositif de détection DD peut prendre la forme d'un boitier comprenant des circuits imprimés, ou bien de plusieurs circuits imprimés reliés par des connections filaires ou non filaires. On entend par circuit imprimé tout type de dispositif apte à effectuer au moins une opération électrique ou électronique. Il (DD) peut, par exemple, comprendre un processeur de signal numérique (ou DSP (« Digital Signal Processor »)), une mémoire vive pour stocker des instructions pour la mise en œuvre par ce processeur du procédé tel que décrit ci-avant, et une mémoire de masse pour le stockage de données destinées à être conservées après la mise en œuvre du procédé. Le processeur de signal numérique constitue au moins en partie les moyens d'analyse MAL, et donc reçoit les données d'environnement acquises pour les analyser, éventuellement après les avoir mises en forme et/ou démodulées et/ou amplifiées, de façon connue en soi. Le dispositif de détection DD peut également comporter une interface d'entrée pour la réception des données d'environnement acquises et une interface de sortie pour la transmission des résultats de ses analyses.

Une ou plusieurs sous étapes de l'étape du procédé peuvent être effectuées par des composants différents. Ainsi, le procédé peut-être mis en œuvre par une pluralité de processeurs, mémoire vive, mémoire de masse, interface d'entrée, interface de sortie et/ou processeur de signal numérique. Dans ces situations, le dispositif de détection DD peut-être décentralisé, au sein d'un réseau local (plusieurs processeurs reliés entre eux par exemple) ou d'un réseau étendu.

## Revendications

1. Procédé de détection d'objet dans un environnement entourant une partie au moins d'un véhicule (V) comprenant des moyens d'acquisition à ultrasons (MAQj) acquérant périodiquement des données dans ledit environnement, ledit procédé comprenant une étape dans laquelle on analyse lesdites données d'environnement acquises sur chaque période afin de détecter un indice de présence d'un objet, et on considère qu'un objet est effectivement présent en cas de détection de cet indice de présence dans N périodes successives, avec N ≥ 2, dans ladite étape on détermine, à partir d'analyses effectuées sur M périodes successives, avec M ≥ 2, une valeur d'un premier paramètre représentatif de la présence de gouttelettes dans ledit environnement, et, lorsque cette valeur déterminée du premier paramètre est supérieure à un seuil, on adapte la valeur en cours de N en fonction de cette valeur déterminée du premier paramètre, **caractérisé en ce que** dans ladite étape on détermine, à partir desdites M analyses successives, d'une part, une première grandeur statistique de distances déterminées pour tous les indices de présence d'objet détectés, et, d'autre part, une seconde grandeur statistique de variations de distances déterminées pour tous les indices de présence d'objet détectés, puis on détermine ladite valeur du premier paramètre en fonction desdites première et seconde grandeurs statistiques déterminées, et **en ce que en ce que** dans ladite étape on détermine ladite valeur du premier paramètre en effectuant une somme pondérée desdites première et seconde grandeurs statistiques déterminées.

2. Procédé selon la revendication 1, **caractérisé en ce que** dans ladite étape lorsque ladite valeur déterminée du premier paramètre est supérieure audit seuil, on adapte également une valeur en cours d'un second paramètre, représentatif d'un niveau de confiance associé à un objet effectivement présent, en fonction de ladite valeur déterminée du premier paramètre.

3. Procédé selon la revendication 1 ou 2, **caractérisé en ce que** lesdites première et seconde grandeurs statistiques sont des variances.

4. Procédé selon l'une des revendications 1 à 3, **caractérisé en ce que** dans ladite étape, lorsque ledit véhicule (V) comprend en outre d'autres moyens d'acquisition (MAQ'k) différents desdits moyens d'acquisition à ultrasons (MAQj) et acquérant périodiquement d'autres données d'environnement, on analyse lesdites autres données d'environnement acquises sur chaque période afin de détecter un indice de présence d'un objet, et on considère qu'un objet est effectivement présent en cas de détection de cet indice de présence dans P périodes successives, la valeur de P étant supérieure ou égale à deux et fonction de ladite valeur déterminée du premier paramètre.

5. Procédé selon la revendication 4, **caractérisé en ce que** dans ladite étape lorsque ladite valeur déterminée du premier paramètre est supérieure audit seuil, on associe à un objet, considéré comme effectivement présent après analyses desdites autres données d'environnement, une valeur d'un autre second paramètre, représentatif d'un niveau de confiance et fonction de ladite valeur déterminée du premier paramètre.

6. Dispositif (DD) de détection mettant en œuvre le procédé selon l'une des revendications précédentes.

7. Véhicule (V) comprenant des moyens d'acquisition à ultrasons (MAQj) acquérant périodiquement des données dans un environnement qui l'entoure au moins partiellement, **caractérisé en ce qu'**il comprend en outre un dispositif de détection (DD) selon la revendication 6.

## Patentansprüche

1. Verfahren zum Erfassen eines Objekts in einer Umgebung, die mindestens einen Teil eines Fahrzeugs (V) umgibt, das Ultraschall-Erfassungsmittel (MAQj) umfasst, die periodisch Daten in der Umgebung erfassen, wobei das Verfahren einen Schritt umfasst, in dem man die in jeder Periode erfassten Umgebungsdaten analysiert, um einen Hinweis auf die Anwesenheit eines Objekts zu erfassen, und man davon ausgeht, dass ein Objekt tatsächlich vorhanden ist, wenn dieser Anwesenheitsindex in N aufeinanderfolgenden Perioden, mit N ≥ 2, erfasst wird, man in diesem Schritt anhand von Analysen, die in M aufeinanderfolgenden Perioden, mit M ≥ 2, durchgeführt wurden, einen Wert eines ersten Parameters bestimmt, der für das Vorhandensein von Tröpfchen in der Umgebung repräsentativ ist, und, wenn dieser bestimmte Wert des ersten Parameters größer als ein Schwellenwert ist, der laufende Wert von N in Abhängigkeit von diesem bestimmten Wert des ersten Parameters angepasst wird, **dadurch gekennzeichnet, dass** in diesem Schritt ausgehend von den M aufeinanderfolgenden Analysen einerseits eine erste statistische Größe der bestimmten Abstände für alle Hinweise auf das Vorhandensein eines erfassten Objekts bestimmt wird und andererseits eine zweite statistische Größe von Abstandsänderungen, die für alle Indizien für das Vorhandensein eines erfassten Objekts bestimmt werden, und dann der Wert des ersten Parameters in Abhängigkeit von der ersten und der zweiten bestimmten statistischen Größe bestimmt wird, und dass in diesem Schritt der Wert des ersten Parameters bestimmt wird, indem eine gewichtete Summe der ersten und der zweiten bestimmten statistischen Größe gebildet wird.

2. Verfahren nach Anspruch 1, **dadurch gekennzeichnet, dass** in dem Schritt, wenn der ermittelte Wert des ersten Parameters größer als der Schwellenwert ist, auch ein laufender Wert eines zweiten Parameters, der für ein mit einem tatsächlich vorhandenen Objekt verbundenes Vertrauensniveau repräsentativ ist, in Abhängigkeit von dem ermittelten Wert des ersten Parameters angepasst wird.

3. Verfahren nach Anspruch 1 oder 2, **dadurch gekennzeichnet, dass** die erste und die zweite statistische Größe Varianzen sind.

4. Verfahren nach einem der Ansprüche 1 bis 3, **dadurch gekennzeichnet, dass** in diesem Schritt, wenn das Fahrzeug (V) außerdem weitere Erfassungsmittel (MAQ'k) umfasst, die sich von den Ultraschall-Erfassungsmitteln (MAQj) unterscheiden und periodisch weitere Umgebungsdaten erfassen, die anderen Umgebungsdaten, die in jeder Periode erfasst werden, analysiert werden, um einen Hinweis auf das Vorhandensein eines Objekts zu erfassen, und davon ausgegangen wird, dass ein Objekt tatsächlich vorhanden ist, wenn dieser Hinweis auf das Vorhandensein in P aufeinanderfolgenden Perioden erfasst wird, wobei der Wert von P größer oder gleich zwei ist und von dem ermittelten Wert des ersten Parameters abhängt.

5. Verfahren nach Anspruch 4, **dadurch gekennzeichnet, dass** in diesem Schritt, wenn der ermittelte Wert des ersten Parameters über dem Schwellenwert liegt, einem Objekt, das nach Analysen der anderen Umgebungsdaten als tatsächlich vorhanden betrachtet wird, ein Wert eines anderen zweiten Parameters zugeordnet wird, der für ein Vertrauensniveau repräsentativ ist und von dem ermittelten Wert des ersten Parameters abhängt.

6. Detektionsvorrichtung (DD), die das Verfahren nach einem der vorhergehenden Ansprüche durchführt.

7. Fahrzeug (V) mit Ultraschall-Erfassungsmitteln (MAQj), die periodisch Daten in einer Umgebung erfassen, die das Fahrzeug zumindest teilweise umgibt, **dadurch gekennzeichnet, dass** es außerdem eine Erfassungsvorrichtung (DD) nach Anspruch 6 umfasst.

## Claims

1. Method for detecting an object in an environment surrounding at least a part of a vehicle (V) comprising ultrasonic acquisition means (MAQj) periodically acquiring data in the said environment, the said method comprising a step in which the said environment data acquired over each period are analysed in order to detect an indication of the presence of an object and an object is considered to be effectively present in the event of detection of this presence index in N successive periods, with N ≥ 2, in the said step a value of a first parameter representative of the presence of droplets in the said environment is determined from analyses carried out over M successive periods, with M ≥ 2, and, when this determined value of the first parameter is greater than a threshold the current value of N is adapted as a function of this determined value of the first parameter, **characterized in that** in the said step there is determined, on the basis of the said M successive analyses, on the one hand, a first statistical magnitude of distances determined for all the indices of presence of object detected, and, on the other hand a second statistical quantity of variations in distances determined for all the indications of the presence of an object detected, and then the said value of the first parameter is determined as a function of the said first and second statistical quantities determined, and **in that** in the said step the said value of the first parameter is determined by performing a weighted sum of the said first and second statistical quantities determined.

2. A method according to claim 1, **characterized in that** in said step when said determined value of the first parameter is greater than said threshold, a current value of a second parameter, representative of a confidence level associated with an object actually present, is also adapted as a function of said determined value of the first parameter.

3. The method of claim 1 or 2, wherein said first and second statistical quantities are variances.

4. Method according to one of claims 1 to 3, **characterized in that** in said step, when said vehicle (V) further comprises other acquisition means (MAQ'k) different from said ultrasonic acquisition means (MAQj) and periodically acquiring other environmental data said other environmental data acquired over each period are analyzed in order to detect an indication of the presence of an object, and an object is considered to be effectively present if this indication of presence is detected in P successive periods, the value of P being greater than or equal to two and depending on said determined value of the first parameter.

5. Method according to claim 4, **characterized in that** in the said step when the said determined value of the first parameter is greater than the said threshold, a value of another second parameter, representative of a level of confidence and a function of the said determined value of the first parameter, is associated with an object, considered to be effectively present after analysis of the said other environmental data.

6. Detection device (DD) implementing the method according to one of the preceding claims.

7. Vehicle (V) comprising ultrasonic acquisition means (MAQj) periodically acquiring data in an environment that at least partially surrounds it, **characterized in that** it further comprises a detection device (DD) according to claim 6.
